(19) **Europäisches Patentamt**
**European Patent Office**
**Office européen des brevets**

(11) **EP 4 560 534 A1**

(12) **EUROPEAN PATENT APPLICATION**

(43) Date of publication:
**28.05.2025 Bulletin 2025/22**

(21) Application number: **24152404.0**

(22) Date of filing: **17.01.2024**

(51) International Patent Classification (IPC):
**G06N 3/048** $^{(2023.01)}$ **G06N 3/045** $^{(2023.01)}$

(52) Cooperative Patent Classification (CPC):
**G06N 3/048;** G06N 3/045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 US 202318518178**

(71) Applicant: **Kneron (Taiwan) Co., Ltd.**
**Taipei City 11470 (TW)**

(72) Inventor: **WU, Chi-Sheng**
**300041 Hsinchu City (TW)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **APPROXIMATION METHOD OF SOFTMAX FUNCTION AND NEURAL NETWORK UTILIZING THE SAME**

(57) An approximation method of softmax function which converts an input value of k-dimensional vector into an output value of m-dimensional vector, comprises: an exponential function approximation computing step performing a Leaky ReLU computation on one input value of k-dimensional vector to obtain a Leaky ReLU computation value and performing a polynomial function computation of a certain order based on the Leaky ReLU computation value to obtain an exponential approxima- tion value, the exponential function approximation com- puting step repeated for another input value of k-dimen- sional vector to obtain another exponential approximation value; an addition computing step adding the expo- nential approximation values to obtain a sum value; and a division computing step dividing at least one of the exponential approximation values obtained in the exponential function approximation computing step by the sum value to obtain an output value of m-dimensional vector.

FIG. 1

EP 4 560 534 A1

**Description**

**BACKGROUND**

**Technical Field**

The invention relates to an approximation method of softmax function and a neural network utilizing the approximation method of softmax function, specifically relates to an approximation method of softmax function used in classifiers of artificial intelligence deep learning models and a neural network utilizing the approximation method of softmax function.

**Related Art**

Artificial intelligence (AI) usually refers to technology that presents human intelligence through ordinary computer programs. The most important part of AI is a kind of neural network that imitates the structure and function of biological neural networks, and then estimates functions to obtain approximate neural network in the field of machine learning and cognitive science. Common neural network models include, for example, convolutional and recurrent neural networks (CNN and RNN). In recent years, Transformer model has been developed. The Transformer model seems to be gradually replacing convolutional and recurrent neural networks (CNN and RNN) and becoming the most popular deep learning model.

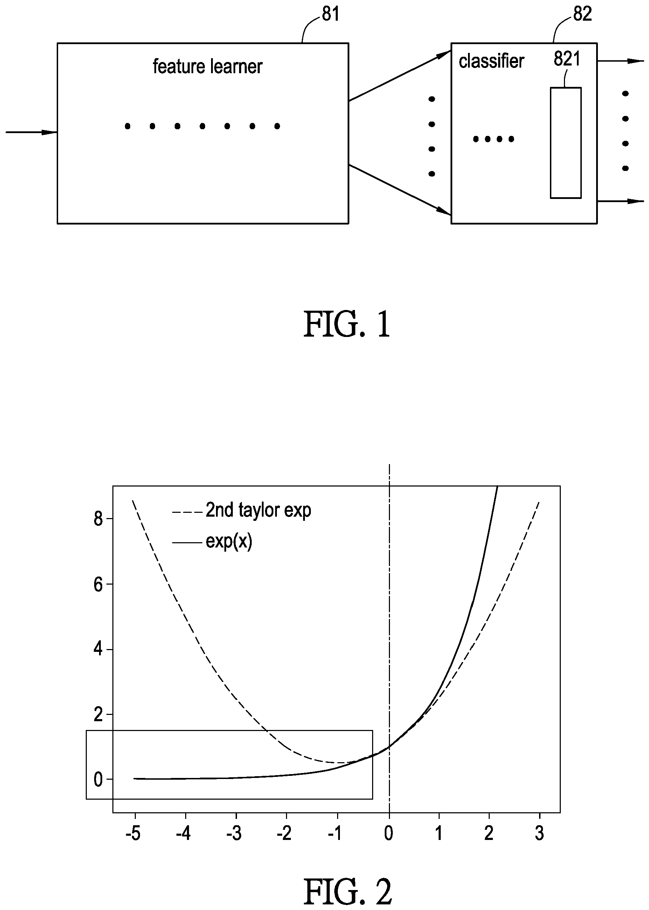

As shown in FIG. 1, no matter which above-mentioned neural network models, it includes at least a feature learner 81 and a classifier 82. In the classifier 82 of the neural network model, a softmax function operation 821 is usually performed so as to output at least one output value which is between 0 and 1.

The expression of a conventional softmax function is as follow:

$$softmax(x_i)_j = \frac{e^{(x_i)}}{\sum e^{(x_i)}} \quad \text{Equation 1}$$

Generally speaking, the input value of the i-dimensional vector can be converted into the output value of the j-dimensional vector through the operation of the softmax function (Equation 1), and each output value of the j-dimensional vector is usually a value from 0 to 1, and the sum of all output values is 1.

In addition, most of the currently commercially available GPUs (for example, manufactured by Nvidia) employ the softmax function of Equation 1, and the input values of the i-dimensional vector is in float32 format to implement the operation of the softmax function. However, in the actual operation of the softmax function, the classifier must process a considerable amount of numerical calculations during the operation process because of too many orders of polynomials and the input values in float32 format, which results in time-consuming and energy-consuming problems. Therefore, how to simplify the operation of softmax function so as to save time and energy in the calculation process of the neural network classifier is an important issue.

**SUMMARY**

In view of the aforementioned problems, an object of the present invention is to provide an approximation method of softmax function that can reduce calculation time and reduce energy consumption at the same time. Furthermore, another object of the present invention is to provide a neural network utilizing the approximation method of softmax function that can reduce calculation time and reduce energy consumption at the same time.

In order to achieve the above object, an approximation method of softmax function which converts input values of a k-dimensional vector into output values of a m-dimensional vector, comprises: an exponential function approximation computing step performing a Leaky Rectified Linear Unit (Leaky ReLU) computation on one of the input values of the k-dimensional vector to obtain a Leaky ReLU computation value and performing a polynomial function computation of a certain order based on the Leaky ReLU computation value to obtain an exponential approximation value, wherein the exponential function approximation computing step is repeated for another one of the input values of the k-dimensional vector to obtain another exponential approximation value; an addition computing step adding the exponential approximation value and the another exponential approximation value to obtain a sum value; and a division computing step dividing at least one of the exponential approximation values obtained in the exponential function approximation computing step by the sum value to obtain one of the output values of the m-dimensional vector.

In one embodiment, in the exponential function approximation computing step, a Clamp function computation is performed on the input value before the exponential function approximation computing step is performed.

In one embodiment, in the addition computing step, the sum value is further added with a protection value to ensure that an absolute value of the sum value is greater than zero.

In one embodiment, the polynomial function computation of a certain order is a polynomial function computation of second-order to fifth-order.

In one embodiment, the exponential function approximation computing step is repeated until the Leaky Rectified Linear Unit (Leaky ReLU) computation is performed on each of the input values to obtain the corresponding Leaky ReLU computation value, and the polynomial function computation of a certain order is performed based on the corresponding Leaky ReLU computation value to obtain the corresponding exponential approximation value. The addition computing step adds up all the corresponding exponential approximation values to obtain the sum value, and the division computing step dividing each of the corresponding exponential approximation values by the sum value to obtain a plurality of output values of the m-dimensional vector corresponding to the k-dimensional vector.

In one embodiment, the input value is an integer value.

Furthermore, according to a neural network utilizing the above-mentioned approximation method of softmax function, a classifier of the neural network has a softmax function computing module, and the softmax function computing module converts input values of a k-dimensional vector into output values of a m-dimensional vector, the softmax function computing module includes: an exponential function approximation computing unit performing a Leaky Rectified Linear Unit (Leaky ReLU) computation on one of the input values of the k-dimensional vector to obtain a Leaky ReLU computation value and performing a polynomial function computation of a certain order based on the Leaky ReLU computation value to obtain an exponential approximation value, wherein the exponential function approximation computing unit repeatedly performs the Leaky ReLU computation on another one of the input values of the k-dimensional vector and performs the polynomial function computation of a certain order to obtain another exponential approximation value; an addition computing unit adding the exponential approximation value and the another exponential approximation value to obtain a sum value; and a division computing unit dividing at least one of the exponential approximation values by the sum value to obtain one of the output value of the m-dimensional vector.

In another embodiment, the exponential function approximation computing unit performs a Clamp function computation on the input value before performing a Leaky Rectified Linear Unit (Leaky ReLU) computation on the input value.

In one embodiment, the addition computing unit further adds the sum value with a protection value to ensure that an absolute value of the sum value is greater than zero.

In one embodiment, the polynomial function computation of a certain order is a polynomial function computation of second-order to fifth-order.

In one embodiment, the exponential function approximation computing unit repeatedly performs the Leaky Rectified Linear Unit (Leaky ReLU) computation on each of the input values to obtain the corresponding Leaky ReLU computation value, and the polynomial function computation of a certain order is performed based on the corresponding Leaky ReLU computation value to obtain the corresponding exponential approximation value. The addition computing unit adds up all the corresponding exponential approximation values to obtain a sum value, and the division computing unit divides each of the corresponding exponential approximation values by the sum value to obtain a plurality of the output values of the m-dimensional vector corresponding to the k-dimensional vector.

In one embodiment, the input value is an integer value.

## BRIEF DESCRIPTION OF THE DRAWINGS

The embodiments will become more fully understood from the detailed description and accompanying drawings, which are given for illustration only, and thus are not limitative of the present invention, and wherein:

FIG. 1 is a block diagram illustrating the basic architecture of a conventional neural network.

FIG. 2 is a comparison diagram of the second-order polynomial function computation results according to the preferred embodiment of the present invention and the conventional softmax function computation results.

FIG. 3 is a flowchart illustrating a Leaky Rectified Linear Unit (Leaky ReLU) computation in an exponential function approximation computing step of the preferred embodiment of the present invention.

FIG. 4 is a block diagram illustrating an approximation method of softmax function of the preferred embodiment of the present invention.

FIG. 5 is a comparison diagram of the exponential function approximation computing result of the preferred embodiment of the present invention and the conventional exponential function computing result.

FIG. 6 is a flowchart illustrating a Clamp function computation in an exponential function approximation computing step of the preferred embodiment of the present invention.

FIG. 7 is a block diagram illustrating another approximation method of softmax function of the preferred embodiment of the present invention.

FIG. 8 is a comparison diagram of another exponential function approximation computing results of the preferred embodiment of the present invention and the conventional exponential function computing results.

FIG. 9 is a comparison table of softmax function output values generated by different exponential function computing equations according to the preferred embodiment of the present invention.

FIG. 10 is a comparison table of softmax function output values generated by different exponential function computing equations and different input vectors from FIG. 9 according to the preferred embodiment of the present invention.

FIG. 11 is a comparison table of softmax function output values generated by different exponential function computing equations according to the preferred embodiment of the present invention, one of the exponential function computing equations includes addition of a protection value.

FIG. 12 is a comparison table of softmax function output values generated by the same exponential function computing equations as in FIG. 11 and the same input vector as FIG. 9 according to a preferred embodiment of the present invention.

## DETAILED DESCRIPTION OF THE INVENTION

The embodiments of the invention will be apparent from the following detailed description, which proceeds with reference to the accompanying drawings, wherein the same references relate to the same elements.

Before describing the embodiment of the present invention in detail, it should first be explained that in this embodiment, the softmax function computation can convert an input value of a k-dimensional vector into an output value of a m-dimensional vector. Therefore, the softmax function in the present embodiment can be expressed as:

$$softmax(x_k)_m = \frac{e^{(x_k)}}{\Sigma_k e^{(x_k)}} \quad \text{Equation 2}$$

$k \geqq m$

Among the softmax function computation in Equation 2 above, the most difficult and time-consuming computation is to perform the exponential function exp(x) (that is, $e^{(xk)}$) computation on the input value of the k-dimensional vector. In practice, when calculating the value of $e^{(xk)}$, Taylor expansion is generally used, that is, Equation 3 is used.

$$e^{(x_k)} = 1 + x_k + \left(\frac{x_k^2}{2!}\right) + \left(\frac{x_k^3}{3!}\right) + \left(\frac{x_k^4}{4!}\right) + \cdots \quad \text{Equation 3}$$

$$e^{(x_k)} \fallingdotseq 1 + x_k + \left(\frac{x_k^2}{2!}\right) \quad \text{Equation 4}$$

Following the above, as shown in FIG. 2, the solid curve in FIG. 2 represents the exponential function value exp(x) calculated according to the polynomial function of a high order shown in Equation 3, while the dotted curve in FIG. 2 represents the exponential function value (2nd-taylor exp(x)) calculated according to the 2nd-order Taylor polynomial shown in Equation 4. As seen from FIG. 2, if the Taylor exponential expansion is limited to a polynomial function of a lower order, for example, a polynomial function of a second order in order to simplify the exponential function computation, the dotted curve in FIG. 2 is obtained. However, it is apparent from the FIG. 2 that the solid curve is much more ideal than the dotted curve.

It can be seen from the above that if you want to simplify the exponential function computation in the softmax function by limiting the exponential function $e^{(xk)}$ to a second-order polynomial computation, but also want to have a computation result close to a high-order polynomial computation, Equation 4 must be modified so that the computation result can be closer to the solid curve shown in FIG. 2.

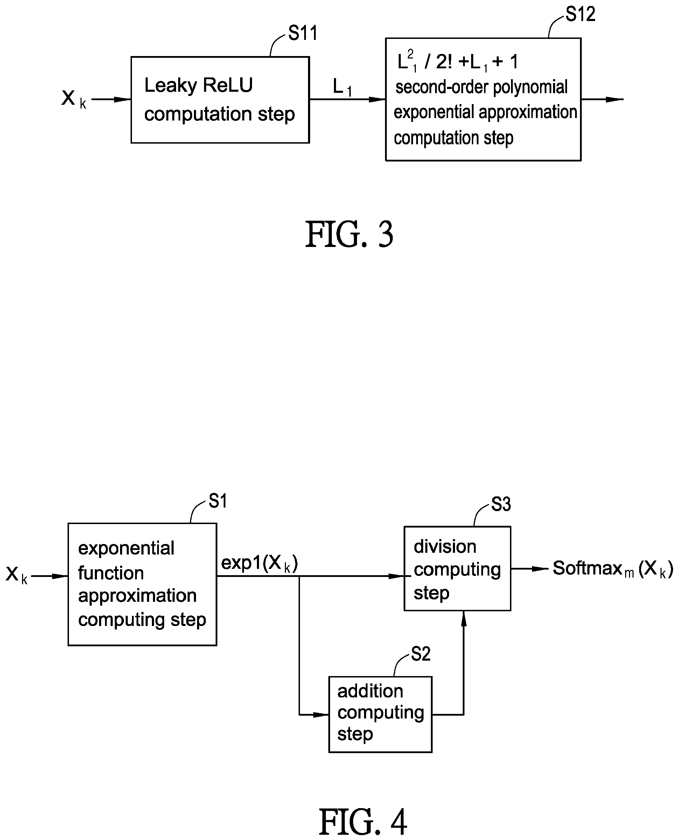

Please refer to FIG. 3 and FIG. 4, an approximation method of softmax function comprises an exponential function approximation computing step S1, an addition computing step S2 and a division computing step S3. Wherein the exponential function approximation computing step S1 performs a Leaky Rectified Linear Unit (Leaky ReLU) computation step S11 as shown in FIG. 3, and performs a second-order polynomial exponential approximation computation step S12. Furthermore, as shown in FIG. 4, the output result of Equation 2 can be obtained through these computation steps.

Please refer to FIG. 3 again, in the present embodiment, a Leaky Rectified Linear Unit (Leaky ReLU) is applied to Equation 4 so as to obtain Equation 5 as shown.

$$e^{(x_k)} \doteqdot 1 + LeakyReLU(x_k) + \left( \frac{LeakyReLU^2(x_k)}{2!} \right) \quad \text{Equation 5}$$

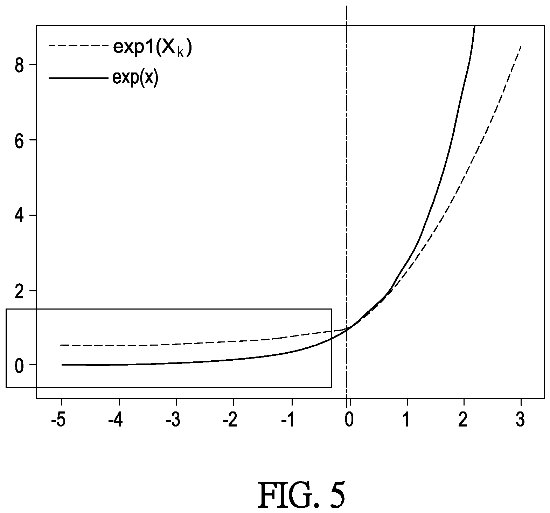

At this time, by utilizing the Leaky ReLU, a Leaky ReLU computation value L1 can be obtain in step S11 such that Equation 5 can be expressed as Equation 6. Through Equation 6, an exponential approximate value $\exp1(x_k)$ can be obtained in the step S12. That is to say, through the steps S11 and S12, the exponential approximation value $\exp1(x_k)$ can be obtained in the step S1 shown in FIG. 4. The result of this computation is represented by the dotted curve shown in FIG. 5. It can be seen from FIG. 5 that when the exponential function $e^{(xk)}$ is limited to a second-order polynomial and a Leaky ReLU computation is performed, the approximate computation result (shown by the dotted line) can be closer to the solid curve when $X_k$ is a negative value.

$$e^{(x_k)} \doteqdot 1 + L_1 + \frac{L_1^2}{2!} \quad \text{Equation 6}$$

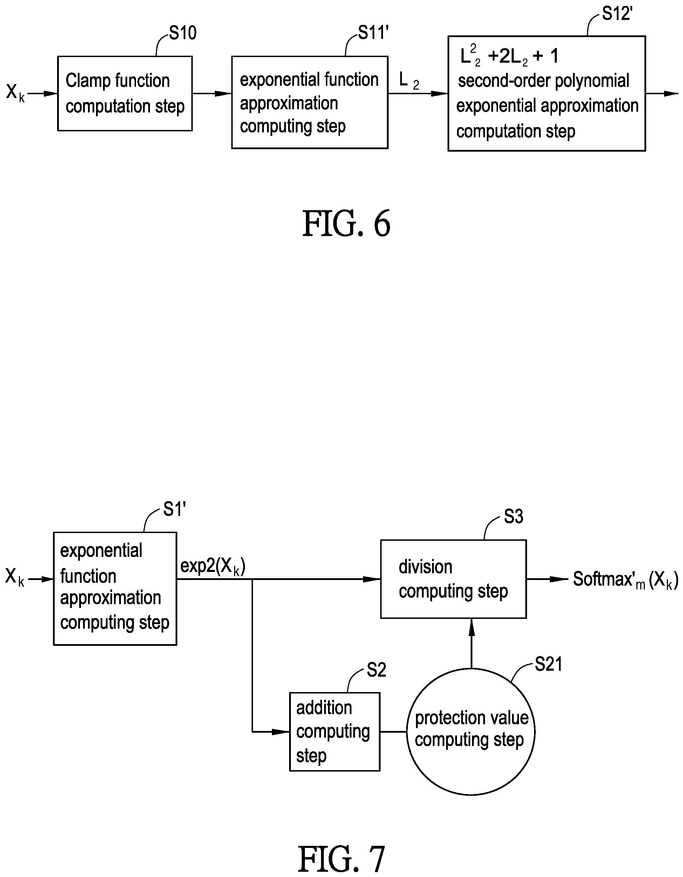

Although the computation results of Equation 5 or Equation 6 are better than those of Equation 4, but it can be seen from FIG. 5 that when $X_k$ is a negative value or greater than 1, the approximate computation result still has a certain degree of deviation. In order to solve the problem that there is still a certain degree of deviation, in a preferred embodiment of the present invention, as shown in FIGs. 6 and 7, in the exponential function approximation computing step S 1', a Clamp function computation is performed in a Clamp function computation step S10 on the input values $X_k$ before the exponential function approximation computing step S11' is performed. Then the second-order polynomial exponential approximation computation step S 12' is performed, which is the computation process shown in FIG. 6. At this time, the second-order polynomial exponential approximation computation formula can be expressed as Equation 7.

$$e^{(x_k)} \doteqdot 1 + LeakyReLU\big(Clamp(x_k, min, max)\big) + \left( \frac{LeakyReLU^2\big(Clamp(x_k, min, max)\big)}{2!} \right)$$

Equation 7

At this time, through the use of the Clamp function and the Leaky ReLU, and step S10, a Leaky ReLU computation value L2 can be obtained in step S11'. Equation 7 can be expressed as Equation 8.

$$e^{(x_k)} \doteqdot 1 + L_2 + \frac{L_2^2}{2!} \quad \text{Equation 8}$$

Here, it is worth mentioning that if f(xk) = Leaky ReLU(Clamp(Xk,min,max)) and the second-order polynomial coefficients are taken into consideration, then the exponential approximation computation value of the present invention can be expressed as the following general formula (Equation 9):

$$e^{(x_k)} \doteqdot af^2(x_k) + bf(x_k) + c \quad \text{Equation 9}$$

In other words, if the Leaky ReLU computation value L1 or the Leaky ReLU computation value L2 is put into Equation 9, then Equation 6 can be expressed as Equation 10, and Equation 8 can be expressed as Equation 11.

$$e^{(x_k)} \doteqdot aL_1^2 + bL_1 + c \quad \text{Equation 10}$$

$$e^{(x_k)} \fallingdotseq aL_2{}^2 + bL_2 + c \quad \text{Equation 11}$$

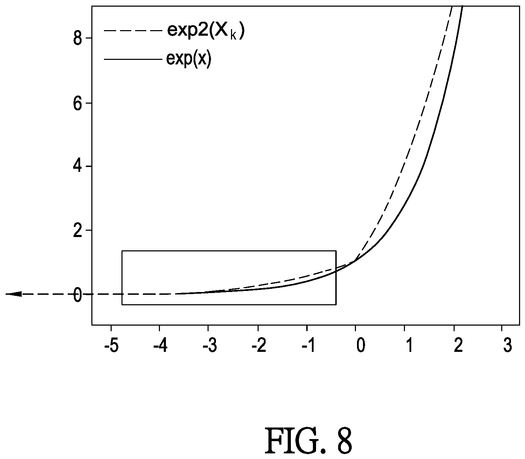

It can be seen from FIG. 8 that when the exponential function $e^{(xk)}$ is limited to a second-order polynomial, and the Clamp function and the Leaky ReLU computation are used, that is, when the equation 8 or equation 11 is used, the computation result shown by the dotted curve can be closer to the high-order computation result shown by the solid line curve when $x_k$ is a negative value or greater than 1. Furthermore, through the Equation 8 or Equation 11, an exponential approximate value exp2(xk) can be obtained in step S12'. In other words, the exponential approximation computation value exp2(xk) can be obtained in the step S1' shown in FIG. 7 .

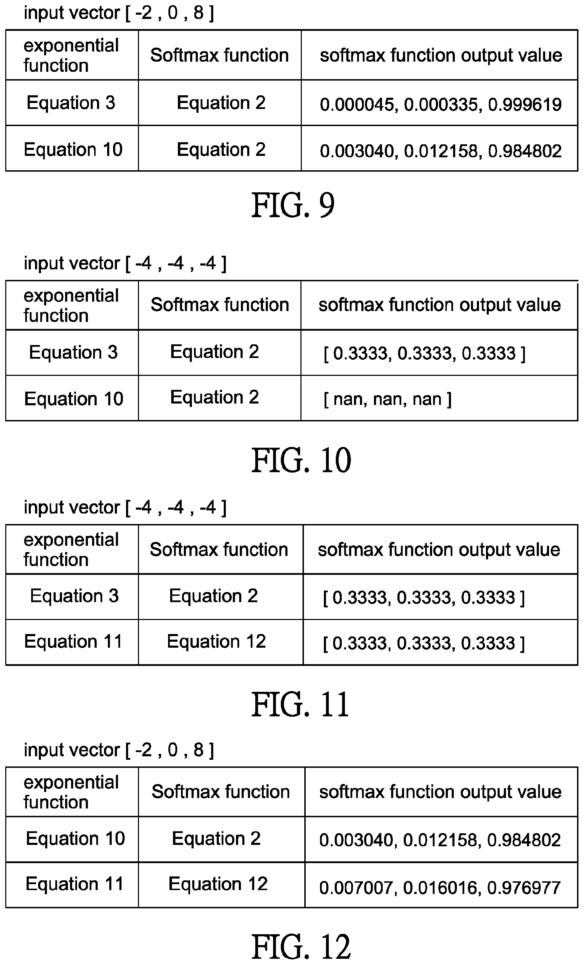

The actual operation of the approximation method of softmax function according to the present invention will be specifically explained below with the reference to FIG. 9. It should be particularly noted that in this embodiment, the softmax function computation (i.e., Equation 2) is performed based on the softmax function computation layer in the Transformer model.

Please refer to FIG. 9 again, when the input vector is [-2, 0, 8], if Equation 3 is used for the exponential function computation and Equation 2 is used for the softmax function computation, then each of the vector values in the input vector can be brought into Equation 3 to obtain the results of $e^{(-2)}$=0.13 , $e^{(0)}$=1 , $e^{(8)}$=2980 respectively. Substituting the computation results of Equation 3 into Equation 2, the computation value (output value) of the softmax function computation (Equation 2) shown in FIG. 9 can be obtained, and its output vector is [0.000045, 0.000335, 0.999619].

Please refer to FIG. 9 again, when the input vector value is [-2, 0, 8], if the exponential function computation is performed through Equation 10 and the softmax function computation is performed through Equation 2, in which the coefficients a=1, b=2, and c=1 shown in Eq. 10 and then each vector value in the input vector value is respectively brought into Equation 10 to be operated, then the output value of the softmax function computation (Equation 2) is [0.003040, 0.012158, 0.984802]. As shown in FIG. 9, the response error is within 1 to 2% for input vectors with a large response ratio (e.g., input "8" in this example).

However, in the above explanation, if the exponential function computation adopts Equation 10, the softmax function computation adopts Equation 2, and the coefficients in Equation 10 is a=1, b=2, and c=1, if the input vector value is [-4, -4, -4], then as shown in FIG. 10, the computation value (output value) of the softmax function (Equation 2) cannot be calculated. This phenomenon is caused by the fact that the denominator in the softmax function computation (Equation 2) may approach 0.

In order to solve the problem that the denominator of the softmax function computation equation may approach 0 such that unable to compute normally occurs, please refer to FIG. 7 again, in this embodiment, the approximation method of softmax function of the present invention comprises a protection value computing step S21, in addition to the exponential approximation computing step S1', the addition computing step S2, and the division computing step S3. The protection value computing step S21 adds the sum value obtained in the addition computing step S2 and a protection value eps after the addition computing step is completed. Accordingly, the computation equation in the approximation method of the present invention can be expressed as Equation 12. In Equation f12, the function of the protection value eps is to ensure that the denominator of Equation 2 is not equal to 0 or not close to 0. It is because if the denominator of Equation 2 is equal to 0 or close to 0, the calculation result of $softmax'(x_k)_m$ will not be obtained.

$$softmax'(x_k)_m = \frac{e^{(x_k)}}{eps + \Sigma_k e^{(x_k)}} \quad \text{Equation 12}$$

k≧m

As shown in FIG. 11, if the exponential function computation adopts Equation 11, the softmax function computation adopts Equation 12, and the coefficients of Equation 11 are a=1, b=2, c= 1, even if the input vector value is [-4, -4, -4], as shown in FIG. 11, the computation value (output value) of the softmax function computation (Equation 12) can also be calculated. In addition, if the exponential function computation adopts Equation 11, the softmax function computation adopts Equation 12, the coefficients of Equation 11are a=1, b=2, c=1, and the eps of Equation 12 =1, even if the input vector value is [-2, 0, 8], as shown in FIG. 12, the computation value (output value) of the softmax function computation (Equation 12) can also be calculated as [0.007007, 0.016016, 0.976977]. Compared with the output value 0.984802 shown in FIG. 12 (using Equation 2), it can be seen that when targeting an input vector with a relatively large response proportion (such as the input "8" in this embodiment), the response error is maintained at 1 Within ~2%.

In summary, in the approximation method of softmax function of the present invention, since the exponential function $e^{(xk)}$ is limited to a low-order polynomial (such as a 2nd-order polynomial), and a Clamp function and a Leaky ReLU are used, when the exponential function $e^{(xk)}$ is calculated using Equation 8 or Equation 11, the computation result shown by the dotted line curve can be approach to that of the solid line curve. In addition, regarding the approximation method of softmax function of the present invention, if the softmax function computation adopts Equation 12, and the coefficients in Equation 11 are appropriately adjusted (for example, a=1, b=2, c =1), then for the main response values, the output error of the softmax function computation according to the present invention is very small.

In addition, it is worth mentioning that in this embodiment, since the elements of the input vector are all integer types, and the exponential function $e^{(xk)}$ is limited to a low-order polynomial (such as a 2nd-order polynomial), Therefore, compared with the conventional float32 format and high-order polynomial operations, the amount of computation is greatly reduced, so the computation time can be reduced and energy consumption can be reduced at the same time.

In another embodiment of the present invention, a neural network utilizing the approximation method is also provided. However, since the detailed description of the neural network utilizing this approximation method of the present invention is generally consistent with the aforementioned method, it is omitted here. The only thing that needs special explanation is that in another embodiment of the present invention, the neural network is not limited to the neural network of the Transformer model.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An approximation method of softmax function, converting one or more input values of a k-dimensional vector into one or more output values of an m-dimensional vector, comprising:

   an exponential function approximation computing step performing a Leaky Rectified Linear Unit (Leaky ReLU) computation on one of the input values of the k-dimensional vector to obtain a Leaky ReLU computation value and performing a polynomial function computation of a certain order based on the Leaky ReLU computation value to obtain an exponential approximation value, wherein the exponential function approximation computing step is repeated for another one of the input values of the k-dimensional vector to obtain another exponential approximation value;
   an addition computing step adding the exponential approximation value and the another exponential approximation value to obtain a sum value; and
   a division computing step dividing at least one of the exponential approximation values obtained in the exponential function approximation computing step by the sum value to obtain one of the output values of the m-dimensional vector.

2. The method of claim 1, wherein in the exponential function approximation computing step, a Clamp function computation is performed on the input value before the exponential function approximation computing step is performed.

3. The method of claim 2, wherein in the addition computing step, the sum value is further added with a protection value to ensure that an absolute value of the sum value is greater than zero.

4. The method of claim 1, wherein the polynomial function computation of a certain order is a polynomial function computation of second-order to fifth-order.

5. The method of claim 1, wherein the exponential function approximation computing step is repeated until the Leaky Rectified Linear Unit (Leaky ReLU) computation is performed on each of the input values to obtain the corresponding Leaky ReLU computation value, and the polynomial function computation of a certain order is performed based on the corresponding Leaky ReLU computation value to obtain the corresponding exponential approximation value, the addition computing step adds up all the corresponding exponential approximation values to obtain the sum value, and the division computing step divides each of the corresponding exponential approximation values by the sum value to obtain a plurality of the output values of the m-dimensional vector corresponding to the k-dimensional vector.

6. The method of claim 1, wherein the input value is a numerical value in the form of an integer.

7. A neural network, the neural network having a classifier which has a softmax function computing module, the softmax function computing module converting one or more input values of a k-dimensional vector into one or more output values of a m-dimensional vector, the softmax function computing module including:

an exponential function approximation computing unit performing a Leaky Rectified Linear Unit (Leaky ReLU) computation on one of the input values of the k-dimensional vector to obtain a Leaky ReLU computation value and performing a polynomial function computation of a certain order based on the Leaky ReLU computation value to obtain an exponential approximation value, wherein the exponential function approximation computing unit further repeatedly processes another one of the input values of the k-dimensional vector to obtain another exponential approximation value;

an addition computing unit adding the exponential approximation value and the another exponential approximation value to obtain a sum value; and

a division computing unit dividing at least one of the exponential approximation values by the sum value to obtain one of the output values of the m-dimensional vector.

8. The neural network of claim 7, wherein the exponential function approximation computing unit performs a Clamp function computation on the input value before performing the Leaky Rectified Linear Unit (Leaky ReLU) computation on the input value.

9. The neural network of claim 8, wherein the addition computing unit further adds the sum value with a protection value to ensure that an absolute value of the sum value is greater than zero.

10. The neural network of claim 7, wherein the polynomial function computation of a certain order is a polynomial function computation of second-order to fifth-order.

11. The neural network of claim 7, wherein the exponential function approximation computing unit repeatedly performs the Leaky Rectified Linear Unit (Leaky ReLU) computation on each of the input values to obtain the corresponding Leaky ReLU computation value, and the polynomial function computation of a certain order is performed based on the corresponding Leaky ReLU computation value to obtain the corresponding exponential approximation value, the addition computing unit adds up all the corresponding exponential approximation values to obtain a sum value, and the division computing unit divides each of the corresponding exponential approximation values by the sum value to obtain a plurality of the output values of the m-dimensional vector corresponding to the k-dimensional vector.

12. The neural network of claim 7, wherein the input value is a numerical value in the form of an integer.

FIG. 1

FIG. 2

FIG. 3

FIG. 4

FIG. 5

S10

$X_k \rightarrow$ Clamp function computation step $\rightarrow$ exponential function approximation computing step $\quad L_2 \rightarrow$

S11'

$L_2^2 + 2L_2 + 1$ second-order polynomial exponential approximation computation step $\rightarrow$

S12'

## FIG. 6

S1'

$X_k \rightarrow$ exponential function approximation computing step $\xrightarrow{\text{exp2}(X_k)}$ division computing step $\rightarrow$ Softmax'$_m$ ($X_k$)

S3

addition computing step

S2

protection value computing step

S21

## FIG. 7

FIG. 8

input vector [ -2 , 0 , 8 ]

| exponential function | Softmax function | softmax function output value |
|---|---|---|
| Equation 3 | Equation 2 | 0.000045, 0.000335, 0.999619 |
| Equation 10 | Equation 2 | 0.003040, 0.012158, 0.984802 |

# FIG. 9

input vector [ -4 , -4 , -4 ]

| exponential function | Softmax function | softmax function output value |
|---|---|---|
| Equation 3 | Equation 2 | [ 0.3333, 0.3333, 0.3333 ] |
| Equation 10 | Equation 2 | [ nan, nan, nan ] |

# FIG. 10

input vector [ -4 , -4 , -4 ]

| exponential function | Softmax function | softmax function output value |
|---|---|---|
| Equation 3 | Equation 2 | [ 0.3333, 0.3333, 0.3333 ] |
| Equation 11 | Equation 12 | [ 0.3333, 0.3333, 0.3333 ] |

# FIG. 11

input vector [ -2 , 0 , 8 ]

| exponential function | Softmax function | softmax function output value |
|---|---|---|
| Equation 10 | Equation 2 | 0.003040, 0.012158, 0.984802 |
| Equation 11 | Equation 12 | 0.007007, 0.016016, 0.976977 |

# FIG. 12

| | Europäisches Patentamt European Patent Office Office européen des brevets | **EUROPEAN SEARCH REPORT** | **Application Number** EP 24 15 2404 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. BANERJEE ET AL: "Exploring alternatives to softmax function", ARXIV.ORG, CORNELL UNIVERSITY LIBRARY, 201 OLIN LIBRARY CORNELL UNIVERSITY ITHACA, NY 14853, 23 November 2020 (2020-11-23), XP081819228, DOI: 10.48550/arXiv.2011.11538 * section 2 * | 1-12 | INV. G06N3/048 ADD. G06N3/045 |
| A | S. KANAI ET AL: "Sigsoftmax: reanalysis of the softmax bottleneck", ARXIV.ORG, CORNELL UNIVERSITY LIBRARY, 201 OLIN LIBRARY CORNELL UNIVERSITY ITHACA, NY 14853, 28 May 2018 (2018-05-28), XP080883056, DOI: 10.48550/arXiv.1805.10829 * sections 2.4, 3.2 and 4; appendices B and C * | 1-12 | |
| A | S. SUN ET AL: "Sparse-softmax: a simpler and faster alternative softmax transformation", ARXIV.ORG, CORNELL UNIVERSITY LIBRARY, 201 OLIN LIBRARY CORNELL UNIVERSITY ITHACA, NY 14853, 23 December 2021 (2021-12-23), XP091122523, DOI: 10.48550/arXiv.2112.12433 * section "Sparse-softmax Algorithm" * | 1-12 | TECHNICAL FIELDS SEARCHED (IPC) G06N G06F |
| X | Q. CHEN ET AL: "Power series expansion neural network", JOURNAL OF COMPUTATIONAL SCIENCE, vol. 59, 101552, 14 January 2022 (2022-01-14), XP086966095, DOI: 10.1016/J.JOCS.2021.101552 * sections 2 and 3 * | 1-12 | |

-/--

The present search report has been drawn up for all claims

| Place of search | Date of completion of the search | Examiner |
|---|---|---|
| The Hague | 29 June 2024 | Douarche, Nicolas |

| | Europäisches Patentamt European Patent Office Office européen des brevets | **EUROPEAN SEARCH REPORT** | Application Number EP 24 15 2404 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | E. KLOBERDANZ ET AL: "DeepStability a study of unstable numerical methods and their solutions in deep learning", PROCEEDINGS OF THE 44TH INTERNATIONAL CONFERENCE ON SOFTWARE ENGINEERING (ICSE'22), 21 May 2022 (2022-05-21), pages 586-597, XP059154598, DOI: 10.1145/3510003.3510095 * the whole document * ----- | 1-12 | |
| | | | TECHNICAL FIELDS SEARCHED (IPC) |

The present search report has been drawn up for all claims

| Place of search | Date of completion of the search | Examiner |
|---|---|---|
| The Hague | 29 June 2024 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)